# FASCICULE DE BREVET EUROPEEN

(11) **EP 0 475 948 B1**
(45) Date de publication et mention de la délivrance du brevet: **05.06.1996**
(21) Numéro de dépôt: 90905205.2
(22) Date de dépôt: 08.03.1990
(51) Int. Cl.: H04N 7/173

(54) **RESEAU DE TELEDISTRIBUTION INTERACTIF A ARCHITECTURE ARBORESCENTE**
INTERAKTIVES FERNVERTEILUNGSNETZ MIT BAUMSTRUKTUR
INTERACTIVE TELEBROADCASTING NETWORK WITH TREE ARCHITECTURE

(43) Date de publication de la demande: 25.03.1992
(73) Titulaire: Bennes Expres S.A., 91120 Palaiseau (FR)
(72) Inventeur: NATHAN, Guy, F-91330 Yerres (FR); ELKAIM, Simon, F-75008 Paris (FR)
(74) Mandataire: Debay, Yves
(86) Numéro de dépôt international: FR9000158
(87) Numéro de publication internationale: WO9114343

(56) Documents cités:
- DE-A- 3 029 803
- FR-A- 2 637 755
- US-A- 4 475 123
- US-A- 4 673 976
- Symposium Record of the 13th Int. TV Symposium, 28 Mai - 2 Juin 1983 , Montreux, (CH), M. TRIBOULET: "An Interactive Teledistribution Network using Fiber Optic Technologies", pages 68-79 voir page 70, ligne 26 - page 72, ligne 38
- IEEE International Conference on Communications '86, 22-25 Juin 1986, Toronto, Cananda, Conference Record, Volume 2 of 3, IEEE, (New York, US), W.K. RITCHIE: "Switched-Star Networks for Integrated Service Distribution", pages 797-801 voir page 797
- Symposium Record of the CATV Sessions, 10 Juin 1985, B. JARRET: "Optical Distribution Network"

## Description

La présente invention conceme un réseau de télédistribution interactif à architecture arborescente. Elle trouve application en particulier dans les réseaux câblés de télévision.

Dans l'art antérieur, on connait déjà un genre de réseau de télédistribution adapté à la transmission d'émissions ou de programmes de télévision par câble présentant une caractéristique d'interactivité, c'est à dire, cette capacité pour le centre serveur de connaître exactement ce que chaque client du réseau demande à son installation. En effet, le brevet US-A-4 475 123 enseigne un Réseau de télédistribution interactif à architecture arborescente du genre comportant un central dans lequel est contrôlé la distribution de programmes de télévision, d'images et de programmes sonores, et un support de transmission en large bande de l'ensemble des programmes reliant le central à au moins deux boîtiers dérivateurs d'usager, comportant
- des moyens pour transmettre des requêtes de programme des usagers vers le central à partir de chaque boîtiers dérivateur d'usagers,
- des moyens dans le central pour, après réception des requêtes de programme des usagers, engendrer des signaux de validation des requêtes de chaque usager,
- des moyens disposés dans chaque boîtier de dérivateur d'usager pour sélectionner un programme parmi l'ensemble des programmes distribués en fonction du signal de validation,
- des moyens dans le central pour interroger un boîtier dérivateur d'usager,
chaque boîtier dérivateur d'usager étant disposé sur l'architecture arborescente entre le central et le récepteur de télévision de l'usager.

C'est un but de la présente invention de permettre de réaliser à bon prix un réseau de distribution de programmes de télévision payante par câble qui s'adapte aussi bien aux petits réseaux de quelques abonnés, qu'aux réseaux s'étendant sur une ville entière par exemple sans avoir à faire de modifications conséquentes des câblages existants.

L'invention se caractérise notamment par le fait que le réseau comporte également un élément coupleur passif accordé sur la fréquence d'une radio-commande de sélection de programme, ledit élément coupleur passif étant raccordé entre l'entrée antenne du téléviseur et le boîtier dérivateur de chaque usager pour permettre la réception de la porteuse modulée de la radio-commande transmettant la sélection souhaitée par l'usager sous forme d'un code décodé par un circuit de réception du boîtier dérivateur d'usager relié aux moyens pour transmettre les requêtes de programme de l'usager vers le central.

Selon une autre caractéristique le réseau comporte un dispositif de téléalimentation du réseau arborescent disposé au central et qui reste polarisé de manière permanente pour alimenter les boîtiers dérivateurs d'usager du réseau de distribution, chaque boîtier dérivateur d'usager comportant un moyen d'extraction de la tension continue de téléalimentation.

Selon une autre caractéristique les boîtiers dérivateurs d'usager comportent un organe de mémorisation et de comparaison de l'identification de l'usager dans l'arborescence du réseau.

Selon une autre caractéristique l'adresse est constitué par le numéro d'ordre du boîtier de distribution dans l'arborescence.

Selon une autre caractéristique l'adresse comporte une première composante correspondant à une branche de l'arborescence et une seconde composante correspondant à l'adresse du boîtier de distribution dans ladite branche.

Selon une autre caractéristique le central comporte un ordinateur connecté à un modem pour gérer une voie de service émettant dans des fenêtres temporelles les codes d'identification des boîtiers dérivateurs d'usagers en séquence dans une première trame, découpée en autant de fenêtres temporelles qu'il y a d'usagers adressables, une fenêtre temporelle comportant l'émission par l'ordinateur du numéro de l'usager interrogé, puis la réception de la requête éventuelle de l'usager, la première trame étant suivie d'une seconde trame de structure identique pour la validation , une quelconque des fenêtres comportant l'émission de l'adresse, puis l'émission d'un signal de validation d'un des programmes sélectionnés.

Selon une autre caractéristique le boîtier dérivateur d'usager se reconnaît adressé lors de la première trame émise par l'ordinateur du central quand il y a égalité dans la comparaison du décodage du code identificateur reçu avec la valeur du code contenu dans le moyen de mémorisation du boîtier dérivateur d'usager, un signal de validation validant la transmission du code de la requête par un circuit modem du boîtier dérivateur d'usager pour émettre une requête sur la voie de service du réseau au central dans le but de demander au central un programme particulier.

Selon une autre caractéristique le circuit de réception (82) est un démodulateur /décodeur connecté à un circuit sérialisateur, dont la sortie est transmise à l'entrée d'émission d'un modulateur démodulateur FSK, ces circuits étant disposés à l'intérieur du boîtier dérivateur d'usager, le code de la requête étant sérialisé seulement si l'adresse émise par le central est identique à l'identificateur mémorisé dans le boîtier de dérivateur d'usager et si la fin de réception d'un mot adresse et donnée émis par le central est détectée par le modulateur démodulateur FSK.

Selon une autre caractéristique l'ordinateur du central traite ensuite la requête de l'usager adressé lors de la première trame et émet le signal de validation de programme relatif au résultat de la comparaison entre la requête et une vérification de l'habilitation de l'usager requérant.

Selon une autre caractéristique en plus des programmes distribués par le réseau, l'ordinateur du central émet au moins un programme d'images destiné à informer l'usager du refus du central de servir sa requête.

Selon une autre caractéristique l'ordinateur du central émet au cours d'une seconde trame sur la voie de service une séquence au cours de laquelle chaque boîtier dérivateur d'usager est adressé au moins une fois dans une fenêtre temporelle comportant une première série de bits représentant l'identificateur de l'usager puis une seconde série de bits représentant la valeur d'un signal de validation en réponse à la requête de l'usager exprimée lors de la première trame

Selon une autre caractéristique le boîtier dérivateur d'usager comporte un moyen de réception de la valeur du signal de validation connecté à un moyen de sélection d'un programme transporté sur le réseau arborescent.

Selon une autre caractéristique le moyen de réception comporte un démodulateur connecté à un convertisseur série-parallèle et un convertisseur analogique numérique destiné à commander par une tension de validation la syntonisation du programme associé au signal de validation.

Selon une autre caractéristique la syntonisation du programme est effectuée par un tuner/convertisseur interbande connecté entre l'entrée du boîtier dérivateur d'usager et le récepteur de télévision de l'usager.

Selon une autre caractéristique le boîtier dérivateur d'usager comporte aussi en parallèle avec le tuner/convertisseur, un filtre réjecteur des bandes réservées aux programmes accessibles aux requêtes de l'usager, de façon à ce que les autres programmes puissent être reçus directement par l'usager sur son récepteur en toute circonstance.

Selon une autre caractéristique chaque boîtier dérivateur d'usager comporte un moyen de maintien de la requête qui est réinitialisé par l'établissement d'une nouvelle requête.

Selon une autre caractéristique l'élément coupleur passif accordé est disposé sur un prolongateur coaxial, ledit élément coupleur passif étant constitué d'une inductance et d'un condensateur accordés sur la fréquence de la radio-commande.

Selon une autre caractéristique l'élément coupleur passif comporte une antenne associée à une inductance pour constituer un ensemble accordé à la fréquence de la radio-commande et raccordée par un câble coaxial à un connecteur mâle femelle coaxial

Selon une autre caractéristique l'ensemble antenne inductance est monté pivotant sur une embase comportant des moyens de fixation .

Selon une autre caractéristique la radiocommande comprend un clavier, un circuit de codage et un circuit oscillateur émetteur modulé par les signaux en provenance du circuit de codage et un élément rayonnant gravé sur un circuit imprimé accordé sur la fréquence correspondant au couplage avec l'élément coupleur passif.

D'autres caractéristiques et avantages de la présente invention seront mieux compris à l'aide de la description et des dessins qui sont :
- la figure 1 : un schéma d'architecture générale du réseau selon l'invention,
- la figure 2 : un schéma d'une partie d'un réseau arborescent selon l'invention,
- la figure 3 : un schéma de central selon l'invention,
- la figure 4 : un schéma représentant un boîtier dérivateur d'usager selon l'invention,
- la figure 5 : un chronogramme expliquant l'interactivité du réseau,
- les figures 6A, 6B, 6C représentent le schéma et les éléments assurant la radiocommande.

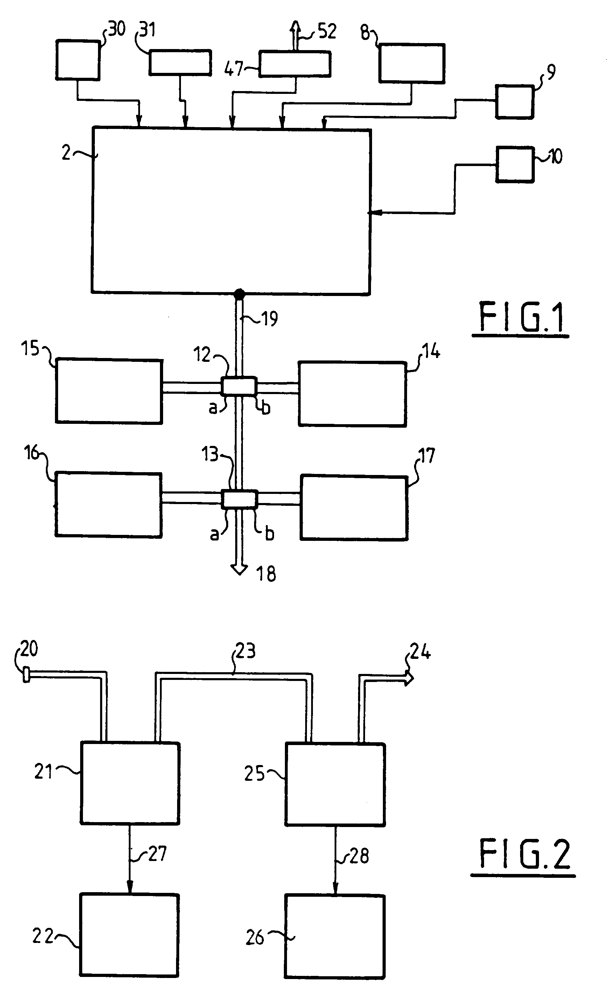

A la figure 1, on a représenté un réseau selon l'invention. Un tel réseau comporte des récepteurs de programmes ou plus précisément d'émissions constituées physiquement par des signaux modulés. Dans un cas particulier, l'invention peut gérer une antenne de réception de télévision par satellite 1, des antennes de réception d'émission terrestre VHF 8, UHF 9 et FM 10.

Selon un autre mode de réalisation de l'invention, d'autres sources de signaux sont utilisées aussi. Il s'agit des signaux émanant de caméras de surveillance et de ceux en provenance de magnétoscopes.

L'ensemble des signaux convenablement remis en forme comme il sera vu plus loin, est transmis sur un câble coaxial (19) sous forme d'un signal multiplexé de plusieurs porteuses. Un réseau arborescent est connecté à ce câble (19) par le biais de boîtiers de dérivation (12, 13, etc).

Chaque sortie a ou b d'un boîtier de dérivation est le point d'accès d'une branche de dérivation (14, 15, 16, 17, etc). Chaque branche de dérivation correspond dans un exemple de réalisation au câblage de 8 usagers. Dans cet exemple de réalisation, chaque branche de dérivation comporte 8 usagers comme il sera vu plus loin à la figure 2 et le câble (19) porte 32 boîtiers de dérivation comme le boîtier (12). On arrive ainsi à un total de 256 usagers servis.

A la figure 2, on a représenté l'une quelconque des branches de dérivation (14 à 17). Une telle branche comporte une entrée (20) directement connectée à la borne a ou b d'un boîtier de dérivation (12) ou (13). Le câble coaxial qui en sort entre sur un boîtier dérivateur d'usager (21) qui permet, comme on le verra plus loin, d'élaborer sous certaines conditions un signal (27) vers un récepteur de télévision (22) actionnable par l'usager.

Du boîtier dérivateur d'usager (21) sort un coaxial (23) qui est relié ensuite un boîtier dérivateur d'usager (25) qui lui-même est relié à un second poste de réception de télévision (26) pour un second usager. Un coaxial (24) permet de poursuivre la branche.

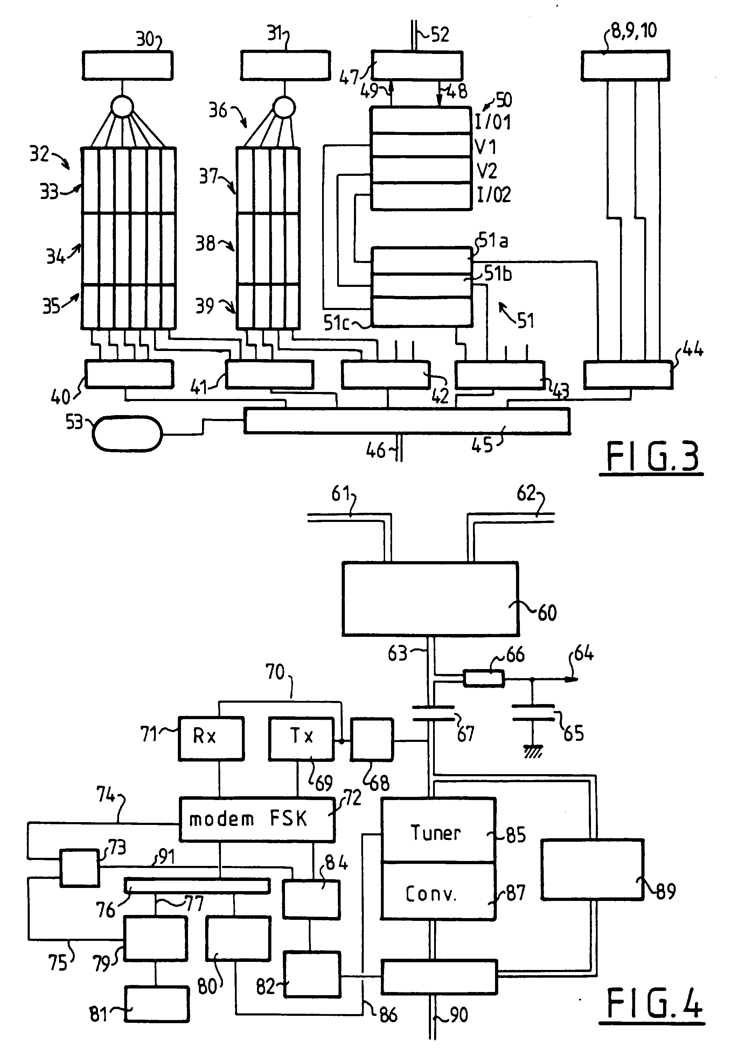

On va maintenant expliquer à l'aide de la figure 3, le fonctionnement d'un central utilisé dans l'invention. Un tel central comporte un premier niveau de traitement qui permet la réalisation d'un multiplex multiporteuse.

Dans le réseau selon l'invention, dans un mode de réalisation préféré les organes d'entrée sont successivement une antenne parabolique de type FSS (Fixed Satellite Service Band) pour recevoir des émissions de satellites géostationnaires, ou de type DBS (Direct, Broadcasting Satellite).

Puis on trouve un circuit modulateur démodulateur dit modem qui est relié au travers d'un ordinateur à une ligne téléphonique. Elle permet de relier le central à l'extérieur.

Enfin, on trouve les antennes classiques de télévision hertzienne terrestres UHF et VHF ainsi que les émissions FM en modulation de fréquence dans la bande II.

Les antennes paraboliques 30 et 31 sont connectées ensuite sur des batteries de démodulateurs spécialisés dans les signaux de fréquence supérieure au Gigahertz. Il s'agit en particulier de transférer les signaux représentatifs des programmes vers des fréquences à la fois compatibles avec les impératifs qui permettent la transmission sur câble coaxial.

Dans l'exemple de réalisation, on dispose dans les bandes dites interbandes par le CCIR de 10 canaux pour la bande "L" et de 10 autres dans la bande "U" et de 2 canaux dans la bande basse, soit un total de 22 canaux. A la figure 3, on utilise 8 canaux en bande "L", 4 canaux en bande "U" et 4 canaux en bande basse dite "S", soit un total de 16 canaux qui permettent de transporter 16 programmes simultanément sans compter ceux des bandes UHF et VHF habituels.

Selon le mode de réalisation représenté figure 3, on a regroupé 10 colonnes de traitement regroupées en deux groupes (32) et (36) selon l'origine (30) ou (31) du signal à traiter. Dans le groupe (32), le signal d'entrée est séparé en 6 signaux par démodulation accordée sur les émissions désirées par 6 démodulateurs (33). Puis on utilise 6 décrypteurs (34) et 6 modulateurs interbande "L" (35).

Un coupleur de la bande interbande "L" (40) permet de regrouper 4 premiers signaux et les deux suivants sont fournis à un second coupleur (41) de même type.

Le signal de l'antenne DBS (31), est envoyé sur un second groupe de traitement (36) qui comporte les mêmes composants que le premier groupe (32), c'est à dire des démodulateurs (37), des décrypteurs (38) et enfin des modulateurs interbandes "L" (39).

Les deux premiers signaux issus de ce second groupe (36) sont fournis au coupleur (41) de bande "L et les deux suivants au coupleur suivant (42).

Ensuite, une ligne téléphonique (52) est connectée à un modem ou circuit modulateur-démodulateur (47). Ce circuit travaille sur un premier port d'entrée-sortie I/01 (48, 49) d'un ordinateur (50), par exemple basé sur une carte à micro-processeur Intel 8086 au standard IBM PC.

L'ordinateur dispose aussi de deux sorties vidéo (V1) et (V2) qui servent à transmettre sur le réseau jusqu'à deux programmes d'images synthétiques ou d'écrans composés. Un second port (I/02) permet d'échanger les données avec un circuit modulateur (51a) qui permet d'échanger des données dans une interbande basse. En réception, le circuit (51a) est aussi un circuit démodulateur qui permet à l'ordinateur d'exploiter des signaux de requête émanant des usagers et des divers organes interactifs de l'invention.

Les sorties (V1) et (V2) sont fournies à des modulateurs (51b) et (51c) en interbande "U" et les signaux qui en sont issus sont fournis à un second coupleur interbande "U" (43).

On constate que dans le montage de la figure 3, deux voies sont libres sur chacun des deux coupleurs en interbande "U". Ils sont réservés pour des usages spéciaux comme les programmes sur magnétoscope depuis le central.

Enfin les diverses sources VHF (8), UHF (9) et FM (10) sont directement couplées sur le coupleur suivant (44).

Les sorties des 5 coupleurs précités (40, 41, 42, 43, 44) sont fournies aux entrées d'un coupleur large bande (45) qui permet d'acheminer dans le câble (46) un signal à 16 porteuses calées sur les fréquences déterminées à l'intérieur des interbandes l'ensemble des porteuses terrestres VHF, UHF, FM et de transmettre des signaux de commande qui seront décrits plus loin.

Un dispositif de téléalimentation (53) permet de fournir l'énergie nécessaire aux divers équipements disposés sur le réseau ainsi qu'il sera expliqué plus loin.

D'autres moyens de transport des signaux peuvent remplacer le câble coaxial (46). En particulier, il est possible d'utiliser un câble à fibre optique. Les circuits d'adaptation sont à la portée de l'homme de métier.

A la figure 4, on a représenté un boîtier dérivateur d'usager. Un tel boîtier correspond à l'un des boîtiers (21) ou (25) de la figure 2. Il permet de raccorder sélectivement le poste de télévision de l'usager au tuner-convertisseur qui permet de transposer une fréquence porteuse sélectionnée parmi les fréquences interbandes en une fréquence de la bande télévision, bande I, bande III, bande IV et V..

Le boîtier dérivateur d'abonné comporte donc un premier coaxial (61) qui amène le spectre complet large bande depuis le central transporté sur le câble coaxial. Un second coaxial (62) permet de transférer l'ensemble du spectre aux boîtiers de dérivateur d'usager suivants de la branche. Un troisième coaxial (63) permet de passer le spectre large bande aux circuits de traitement qui vont être exposés maintenant. Les trois coaxiaux sont connectés sur un répartiteur (60).

Le coaxial (63) est tout d'abord connecté à un organe qui permet de séparer la téléalimentation du signal transporté par le câble depuis le central.

Un tel organe comporte un extracteur de tension continue constitué d'une inductance (66) et d'un condensateur (65). La borne (64) permet d'alimenter l'ensemble des circuits du boîtier dérivateur et donc d'assurer la sélection interactive selon l'invention qui va être exposée ici.

Le signal large bande débarrassé de la tension continue au moyen du condensateur (67) contient bien entendu les trois bandes dites interbandes "L", "U" et basse prédécrites mais aussi les bandes classiques de télévision et radio terrestres. Afin de permettre le transfert direct au récepteur de télévision des bandes terrestres sans subir la tarification et les validations du dispositif de l'invention, on dispose d'un filtre réjecteur (89) des bandes d'interbande, ce qui a pour effet que les bandes classiques et les programmes classiques de télévision sont disponibles sur le téléviseur par son entrée coaxiale alimentée par le coaxial 90.

Le signal large bande est d'abord épuré par un filtre passe bande (68) qui joue aussi un rôle en émission comme il sera vu plus loin. La sortie du filtre 68 est alors transmise à un circuit récepteur démodulateur (71) dont la sortie alimente l'entrée réception d'un circuit modulateur démodulateur dit modem (72).

Dans le mode de réalisation préféré de l'invention, le modem est de type FSK (Frequency Shift Keying) selon laquelle les bits "1" et "0" sont codés par une suite d'oscillations à deux fréquences caractéristiques distinctes.

Le boîtier dérivateur selon l'invention comporte aussi un démodulateur/décodeur de radiocommande (82). Par le câble coaxial (90) transite une porteuse modulée autour de 300 Mhz qui est démodulée et décodée par le circuit (82). Ce circuit permet en fait à l'usager de sélectionner par une radiocommande décrite ci-après la chaîne ou le programme qu'il demande à recevoir. Le démodulateur/décodeur de radiocommande (82) fournit un code en mots de 4 bits qui sont sérialisés par le circuit (84) et transmis à l'entrée émission du modem FSK (72).

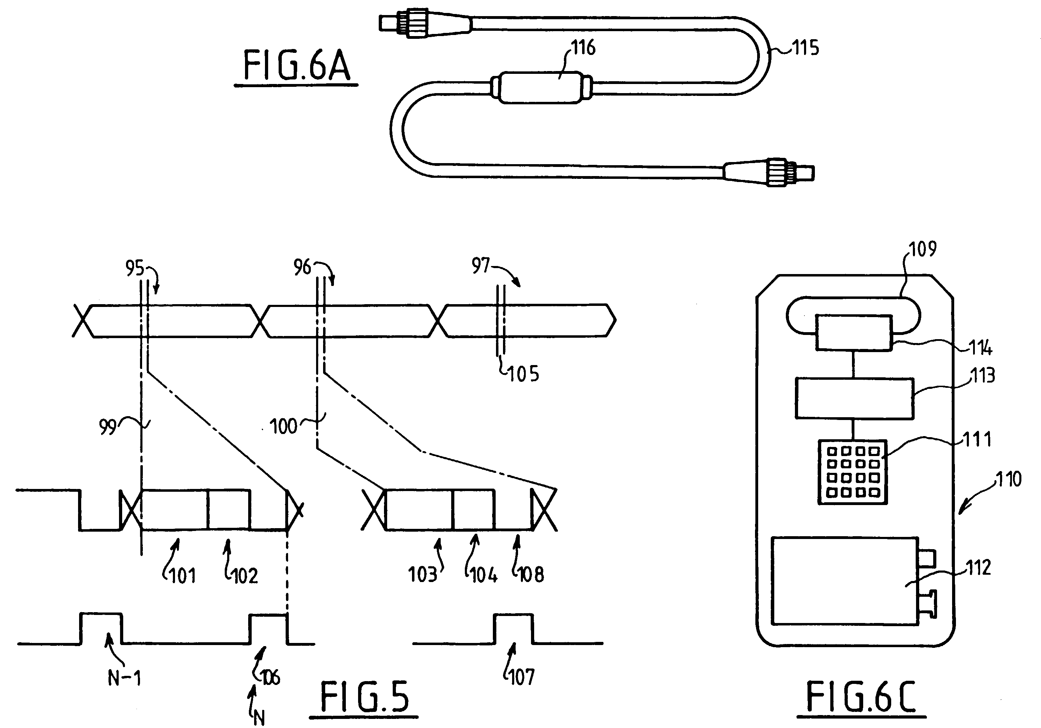

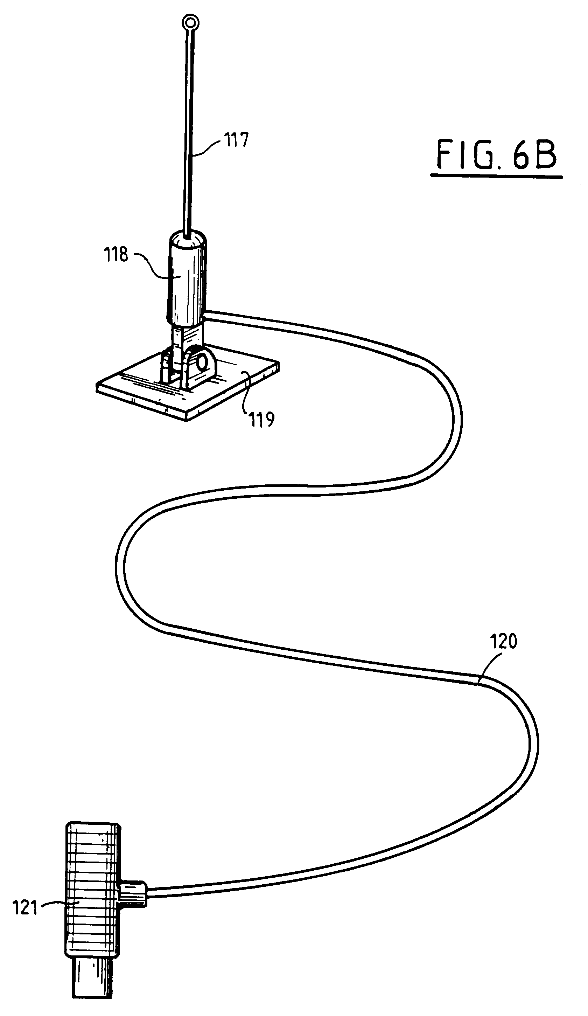

La radiocommande représentée à la figure 6C est constituée d'un boîtier (110) équipé de 16 touches (111), d'une pile (112), d'un circuit imprimé comportant un circuit intégré de codage (113) et un oscillateur émetteur (114) modulé par les signaux en provenance du circuit de codage. L'oscillateur (114) rayonne au moyen d'une antenne (109) gravée sur le circuit imprimé dans un rayon de quelques mètres. Ce rayonnement est capté par une des deux variantes des figures 6A ou 6B. La première variante est constituée d'un cordon de raccordement (115) de type coaxial sur lequel on a disposé un circuit passif (116) constitué d'une inductance et d'un condensateur accordés sur la fréquence d'émission de la radiocommande.

La deuxième variante est constituée d'une antenne de type fouet (117) associée à une inductance (118) permettant d'accorder l'ensemble sur la fréquence de la radiocommande. Cet ensemble (117, 118) est monté pivotant sur un socle (119) autocollant. L'inductance (118) est raccordée à un câble coaxial (120) au bout duquel se trouve un connecteur mâle femelle (121) faisant aussi fonction de coupleur. L'embout mâle se connecte directement à l'entrée antenne du téléviseur et l'embout femelle est relié à la sortie (90) du boîtier dérivateur d'abonné. On remarque qu'avec ce procédé aucun équipement actif et sensible n'est mis en place chez l'abonné, ce qui évite les possibilités de fraude et diminue les coûts d'installation. En particulier le dérivateur d'usager ne se trouve pas forcément chez l'usager.

Le signal d'émission du modem (72) est alors modulé sur une porteuse à 72 Mhz par un circuit émetteur (69) et injecté sur le répartiteur (60) par le coaxial (63) à travers successivement le filtre passe bande (68) et le condensateur (67).

Cependant,cette émission n'est possible que lors d'une courte fenêtre temporelle validée sur une commande (91) issue d'une porte ET (73) comme il sera vu plus loin.

Dans le cas où ce signal de requête est émis sur le central par le coaxial (61) puis le coaxial principal du réseau arborescent jusqu'au coupleur large bande (45) de la figure 3, il est pris en compte par le coupleur (44) et reconnu par le démodulateur (5la). Il s'agit en fait d'une interface ordinateur.

Une telle interface comporte un modem FSK du même type que (72) dont les fréquences sont F1 et F2 pour les bits "0" et "1" en émission et F3 et F4 pour les bits "0" et "1" en réception. En réception le modem fourni à l'entrée I/O de l'ordinateur 50 un mot de bits en série qui est décodé dans un programme de gestion du réseau interactif.

Lorsque le logiciel de gestion du réseau impose une connexion de programme, le modulateur du circuit (51a) émet une série de bits qui transitent bien entendu sur les différents coaxiaux (46) de la figure 3 puis (61) et (62) de la figure 4. Ce message est disponible pour tous les boîtiers de dérivation du réseau arborescent.

Dans le mode de réalisation préféré, le message est un mot série de 12 bits, dont 8 bits correspondent à l'adresse de l'usager et 4 bits correspondent au numéro du programme qui est imposé à un instant donné.

Dans le boîtier dérivateur d'usager de la figure 4, le mot de 12 bits série reçu transite sur le coaxial 63, est transmis par le filtre passe bande (68) et fourni au récepteur démodulateur (71) qui délivre le signal de modulation FSK au modem (72).

Le modem 72 émet alors une série de 12 bit à un transformateur série / parallèle (76) dont la sortie est un bus de 12 lignes dont les 8 poids faibles sont fournis à une première entrée (77) d'un comparateur bit à bit (79) et les 4 bits de poids fort à un convertisseur numérique/analogique convenablement étalonné (80).

Les tensions programmées sont alors fournies à un tuner (85) qui permet de syntoniser la porteuse sélectionnée qui est ensuite fournie à un convertisseur (87). La syntonisation est classiquement obtenue à l'aide principalement d'une diode varicap dont la tension de polarisation est la tension d'accord du tuner. On peut ainsi sélectionner dans les interbandes transitant sur le coaxial (63) le programme correspondant à la requête de l'abonné, si elle est validée.

Cependant, le comparateur (79) qui reçoit sur sa première entrée le mot de 8 bits correspondant à l'adresse de l'abonné à servir comporte une seconde entrée connectée à un sélecteur d'abonné 81. Un tel circuit comporte principalement des microcontacts installés en position donnée lors de l'installation du boîtier dérivateur d'usager. Le positionnement des microcontacts établit le numéro d'abonné. Si le numéro correspond à celui du mot appliqué à la première entrée (77) du comparateur (79), alors la sortie (75) du comparateur passe à l'état actif "1".

A la fin de la réception du message de 12 bits, la sortie (74) du modem (72) passe à l'état haut "1" si le modem est en position d'émission. Alors la sortie de la porte ET (73) passe au niveau "1", autorisant la délivrance de la conversion série parallèle de la requête de l'abonné dans le circuit (84) vers l'entrée émission du modem (72) et ainsi sa transmission vers le central comme il a été décrit plus haut.

L'ordinateur du central comporte un logiciel de gestion des usagers. S'il reconnaît que le numéro d'usager qui vient d'être émis a le droit de recevoir le canal qu'il demande, alors l'ordinateur valide la demande . Il transmet le mot de 4 bits demandé au cours d'un second cycle qui est donc décodé par le convertisseur 80 et permet la réception du programme requis par l'usager.

Si l'ordinateur ne reconnait pas que le numéro de l'usager lui permet d'honorer sa requête, alors dans le second cycle, l'ordinateur ne valide pas la demande et impose selon la même procédure un autre mot de 4 bits que celui requis par l'usager. Ce mot de 4 bits correspond à la tension de syntonisation sur le tuner (85) qui permet de recevoir l'une des voies de service (V1) ou (V2) de l'ordinateur génèrant une image de caractères alphanumériques composant un message prévenant l'usager que sa requête ne peut être honorée pour telle raison qui convient.

En particulier l'usager pourrait ne pas être abonné pour recevoir ce programme et un message lui est ainsi passé qui l'incite à s'abonner et l'informe de la procédure à suivre.

On remarque qu'il n'y a aucune liaison directe entre les moyens d'expression de la requête de l'abonné et le circuit de sélection du programme du tuner/convertisseur 85, 87. Toutes les requêtes transitent obligatoirement par l'ordinateur ce qui évite toute possibilité de tricherie.

De même, on aperçoit un autre avantage de l'invention dans le fait qu'il est impossible de réaliser un pontage du boîtier de dérivation. En effet, toutes les requêtes sont centralisées sur l'ordinateur, ce qui évite les fraudes.

De plus, l'interactivité intervient par le fait qu'à une requête correspond une réponse de l'ordinateur.

A la figure 5, on va maintenant expliquer le mode de dialogue qui réalise l'interactivité du réseau selon l'invention.

Sur la voie de service le signal de commande et de requête, qui modulée convenablement en bande interbande basse, transite sur le coaxial principal du réseau arborescent atteint tous les boîtiers de distribution du réseau. Ce signal comporte une succession ininterrompue de paire de trames.

Dans le cas d'un réseau de 256 abonnés avec 16 programmes distribuer, 8 bits sont nécessaires pour adresser chaque abonné et 4 bits pour identifier convenablement un programme. Il est clair que l'invention conserve tout son intérêt pour des nombres plus faibles ou plus importants. En particulier, l'identificateur d'un abonné (ci-après son adresse) ou celui d'un programme (ci-après son numéro) peut être un vecteur. Dans le cas d'un identificateur d'abonné, celui-ci peut comporter une première composante correspondant à l'adresse de la branche du réseau de l'arborescence comme les branches 14, 15, 16 ou 17 de la figure 2. Il s'agit alors du numéro de la sortie (a) ou (b) du boîtier de dérivation (12) ou (13) selon l'exemple de la figure 2.

Une seconde composante est alors l'adresse du boîtier de distribution dans la branche identifiée par la première composante. Une telle solution n'interdit pas, ainsi qu'il a été expliqué plus haut un cryptage des identificateurs ainsi qu'une reprogrammation de leur valeur à l'initiative de l'ordinateur du central.

Les références (95, 96, 97) représentent chacune un ensemble de 256 cycles d'interrogation et de réponse géré par l'ordinateur (50). Le protocole de gestion du réseau câble utilise un ensemble de 256 signaux d'interrogation immédiatement suivi d'une réponse du boîtier dérivateur d'usager adressé. Ainsi la référence (99) représente la séquence d'échange entre l'ordinateur (50) par la voie (51a) avec un boîtier dérivateur d'usager donné (N). Au début de cette séquence d'échange (99) l'ordinateur (50) envoie une trame d'interrogation de 12 bits (101, 102) comportant dans le champ (101) 8 bits d'adresse permettant d'adresser l'un des 256 boîtiers et dans le champ (102) 4 bits de données qui dans une phase initiale d'interrogation du boîtier (N) sont positionnés à zéro. Ces deux champs (101,102) sont immédiatement suivis par une mise en attente de réception de l'ordinateur pour une durée de temps correspondant à la réception de 4 bits (106) représentant la sélection d'un des canaux télédistribué demandé par l'usager. A l'initialisation du système, l'ordinateur reçoit "OOOO" et commande à la séquence de validation (90) du boîtier dérivateur (N) la validation du canal de service par exemple en émettant dans la zone (102) les données "OOOO". Dans le cas où, pour le boîtier dérivateur de l'usager (N) le signal de réponse est "0101", suite à la dernière sélection radiocommandée l'ordinateur envoie à l'adresse du boîtier (N) les données "0101" dans le champ de données (102) de la trame. Ce champ (102) est suivi d'un champ d'attente de réception par l'ordinateur du signal de réponse (106) provenant du boîtier dérivateur d'usager. Le signal de réponse (106) pourra être identique à celui de la séquence précédente en cas de non modification de la sélection ou changer suite à la sélection d'un autre canal. Dans ce dernier cas la nouvelle sélection transmise dans la réponse (106) sera validée par le logiciel de gestion du réseau à la séquence (100) suivante. Le logiciel de gestion du réseau interactif prend en compte les requêtes de sélection de la façon suivante.

Deux cas se présentent. Ou bien, le logiciel de gestion du réseau interactif a reconnu que l'usager est bien un abonné (plus généralement une personne autorisée) et alors la tension (86) délivrée par la liaison entre le convertisseur numérique analogique (80) et le tuner (85) correspond à la syntonisation d'un signal permettant la réception du programme télévisé demandé par l'usager.

Ou bien, l'usager n'est pas reconnu comme une personne autorisée au moins pour le programme demandé, et alors, la tension 86 délivre par la liaison commande sur le tuner convertisseur (85,87) la syntonisation d'un signal transmettant un programme d'avertissement indiquant à l'usager qu'il n'est pas autorisé à recevoir ce programme. Ce programme d'avertissement est généré par l'ordinateur 50 sur la voie V1 ou la voie V2.

On remarque que la durée d'un cycle pour un débit classique en liaison asynchrone de 9600 bauds/sec est pour des mots de 12 bits plus 4 bits validés inférieure à la seconde. Cela signifie que dans l'exemple de réalisation préféré la requête d'un usager est satisfaite en moins d'une seconde ce qui est un temps convenable à la majorité des applications.

Une protection supplémentaire contre la fraude consiste à compter pour un usager donné, le. nombre de requêtes que le central ne peut honorer. Quand ce nombre dépasse un chiffre seuil (3 répétition dans l'exemple préféré), alors une alarme indique les coordonnées du fraudeur connues par l'adresse du signal d'interrogation et la nature de la fraude. Un éventuel fraudeur n'a donc plus que 3 secondes pour travailler.

Dans l'exemple de réalisation préféré, le boîtier de distribution chez l'usager est plombé.

Un logiciel adéquat permet de réaliser des statistiques d'audience et de prévoir une facturation au temps d'audience ou en nombre de programmes. A cette fin, la condition d'égalité est maintenue tant que la requête n'est pas changée au niveau de l'ordinateur central, le convertisseur (80) du boîtier de dérivateur d'usager comporte un dispositif de mémorisation de la requête validée, tant que celle-ci ne change pas. A cette fin, le convertisseur est complété en entrée par une bascule qui mémorise la requête et la rend permanente. Un tel circuit étant à la portée de l'homme de métier il n'est pas décrit dans la présente description.

Un autre avantage de l'invention est de permettre l'auto-diagnostic. En effet, s'il y a une anomalie dans la réponse d'au moins un des boîtiers dérivateurs d'usagers, le micro-ordinateur connaissant l'adresse émise pour interroger le boîtier, pourra, par un logiciel additionnel représenter le réseau de distribution et faire figurer dans un mode de représentation différent le ou les boîtiers dérivateurs pour lesquels une réponse anormale a été reçue.

Par ailleurs, comme chaque micro-ordinateur de gestion d'un réseau local peut être relié par des moyens de télécommunications avec un site central regroupant toutes les informations provenant des différents réseaux locaux, on peut également prévoir au niveau nécessaire (microordinateur ou site central), des moyens d'effectuer un zoom dans le diagramme de représentation de façon à obtenir des renseignements complémentaires.

D'autres modifications à la portée de l'homme de métier font également partie de l'invention.

## Revendications

1. Réseau de télédistribution interactif à architecture arborescente du genre comportant un central dans lequel est contrôlée la distribution de programmes de télévision, d'images et de programmes sonores, et un support de transmission en large bande de l'ensemble des programmes reliant le central à au moins deux boîtiers dérivateurs d'usager, comportant
- des moyens (50, 51a) dans le central pour interroger un boîtier dérivateur d'usager,
- des moyens (84, 72, 69, 68) pour transmettre des requêtes de programme des usagers vers le central à partir de chaque boîtier dérivateur d'usager,
- des moyens dans le central pour, après réception des requêtes de programme des usagers, engendrer des signaux (100) de validation des requêtes de chaque usager,
- des moyens (72, 80, 85, 87) disposés dans chaque boîtier dérivateur d'usager pour sélectionner un programme parmi l'ensemble des programmes distribués en fonction du signal de validation,
chaque boîtier dérivateur d'usager étant disposé sur l'architecture arborescente entre le central et le récepteur de télévision de l'usager, caractérisé en ce qu'il comporte également un élément coupleur passif (115, 116 ou 117 à 121) accordé sur la fréquence d'une radio-commande (110) de sélection de programme, ledit élément coupleur passif étant raccordé entre l'entrée antenne du téléviseur et le boîtier dérivateur de chaque usager pour permettre la réception de la porteuse modulée de la radio-commande transmettant la sélection souhaitée par l'usager sous forme d'un code décodé par un circuit de réception (82) du boîtier dérivateur d'usager relié aux moyens (84, 72, 69, 68) pour transmettre les requêtes de programme de l'usager vers le central.

2. Réseau selon la revendication 1, caractérisé en ce qu'il comporte un dispositif de téléalimentation du réseau arborescent disposé au central et qui reste polarisé de manière permanente pour alimenter les boîtiers dérivateurs d'usager du réseau de distribution, chaque boîtier dérivateur d'usager comportant un moyen (66, 65) d'extraction de la tension continue de téléalimentation.

3. Réseau selon la revendication 1, caractérisé en ce que les boîtiers dérivateurs d'usager comportent un organe de mémorisation (81) et de comparaison (79) de l'adresse de l'usager dans l'arborescence du réseau.

4. Réseau selon la revendication 3, caractérisé en ce que l'adresse est constituée par le numéro d'ordre du boîtier de distribution dans l'arborescence.

5. Réseau selon la revendication 4, caractérisé en ce que l'adresse comporte une première composante correspondant à une branche de l'arborescence et une seconde composante correspondant à l'adresse du boîtier de distribution dans ladite branche.

6. Réseau selon l'une des revendications précédentes, caractérisé en ce que le central comporte un ordinateur connecté à un modem pour gérer une voie de service émettant dans des fenêtres temporelles (99) les adresses des boîtiers dérivateurs d'usagers en séquence dans une première trame, découpée en autant de fenêtres temporelles qu'il y a d'usagers adressables, une fenêtre temporelle comportant l'émission par l'ordinateur de l'adresse (101) de l'usager interrogé, puis la réception (106) de la requête éventuelle de l'usager, la première trame étant suivie d'une seconde trame de structure identique pour la validation , une quelconque des fenêtres comportant l'émission de l'adresse (103), puis l'émission d'un signal de validation (104) d'un des programmes sélectionnés.

7. Réseau selon la revendication 6, caractérisé en ce que le boîtier dérivateur d'usager se reconnaît adressé lors de la première trame émise par l'ordinateur du central quand il y a égalité dans la comparaison du décodage de l'adresse reçue avec la valeur du code contenu dans le moyen de mémorisation (81) du boîtier dérivateur d'usager, un signal de validation (91) validant la transmission du code de la requête par un circuit modem (72) du boîtier dérivateur d'usager pour émettre une requête sur la voie de service du réseau au central dans le but de demander au central un programme particulier.

8. Réseau selon la revendication 7, caractérisé en ce que le circuit de réception (82) est un démodulateur /décodeur connecté à un circuit sérialisateur (84), dont la sortie est transmise à l'entrée d'émission d'un modulateur démodulateur FSK (72), ces circuits étant disposés à l'intérieur du boîtier dérivateur d'usager, le code de la requête étant sérialisé seulement si l'adresse émise par le central est identique à l'adresse mémorisée dans le boîtier de dérivateur d'usager et si la fin de réception d'un mot adresse et donnée émis par le central est détectée par le modulateur démodulateur FSK (72).

9. Réseau selon la revendication 7 ou 8, caractérisé en ce que l'ordinateur du central traite ensuite la requête (106) de l'usager adressé lors de la première trame (95) et émet le signal de validation (104) de programme relatif au résultat de la comparaison entre la requête et une vérification de l'habilitation de l'usager requérant.

10. Réseau selon la revendication 1 ou 8, caractérisé en ce qu'en plus des programmes distribués par le réseau, l'ordinateur du central émet au moins un programme d'images destiné à informer l'usager du refus du central de servir sa requête.

11. Réseau selon la revendication 8 ou 9, caractérisé en ce que l'ordinateur du central émet au cours d'une seconde trame (96) sur la voie de service une séquence au cours de laquelle chaque boîtier dérivateur d'usager est adressé au moins une fois dans une fenêtre temporelle comportant une première série de bits (103) représentant l'adresse de l'usager puis une seconde série de bits (104) représentant la valeur d'un signal de validation en réponse à la requête de l'usager exprimée lors de la première trame (95).

12. Réseau selon la revendication 1 ou 11, caractérisé en ce que le boîtier dérivateur d'usager comporte un moyen de réception de la valeur du signal de validation connecté à un moyen de sélection (85, 87) d'un programme transporté sur le réseau arborescent.

13. Réseau selon la revendication 12, caractérisé en ce que le moyen de réception comporte un démodulateur (72) connecté à un convertisseur série-parallèle (76) et un convertisseur analogique numérique (80) destiné à commander par une tension de validation (86) la syntonisation du programme associé au signal de validation.

14. Réseau selon la revendication 13, caractérisé en ce que la syntonisation du programme est effectuée par un tuner/convertisseur (85, 87) interbande connecté entre l'entrée (63) du boîtier dérivateur d'usager et le récepteur de télévision de l'usager.

15. Réseau selon la revendication 14, caractérisé en ce qu'il comporte aussi en parallèle avec le tuner/convertisseur (85, 87), un filtre réjecteur (89) des bandes réservées aux programmes accessibles aux requêtes de l'usager, de façon à ce que les autres programmes puissent être reçus directement par l'usager sur son récepteur en toute circonstance.

16. Réseau selon la revendication 6 ou 2, caractérisé en ce que chaque boîtier dérivateur d'usager comporte un moyen (80) de maintien de la requête qui est réinitialisé par l'établissement d'une nouvelle requête.

17. Réseau selon la revendication 1, caractérisé en ce que l'élément coupleur passif (116) accordé est disposé sur un prolongateur coaxial (115), ledit élément coupleur passif (116) étant constitué d'une inductance et d'un condensateur accordés sur la fréquence de la radio-commande.

18. Réseau selon la revendication 1, caractérisé en ce que l'élément coupleur passif comporte une antenne (117) associée à une inductance (118) pour constituer un ensemble accordé à la fréquence de la radio-commande et raccordée par un câble coaxial (120) à un connecteur mâle femelle coaxial (121).

19. Réseau selon la revendication 18, caractérisé en ce que l'ensemble antenne (117) inductance est monté pivotant sur une embase comportant des moyens de fixation .

20. Réseau selon une des revendications ou 17 à 19, caractérisé en ce que la radiocommande (110) comprend un clavier (111), un circuit de codage (113) et un circuit oscillateur émetteur (114) modulé par les signaux en provenance du circuit de codage (113) et un élément rayonnant gravé sur un circuit imprimé (109) accordé sur la fréquence correspondant au couplage avec l'élément coupleur passif.

## Patentansprüche

1. Interaktives Verteilernetz mit baumförmiger Architektur, mit einer zentraleinheit, von welcher aus die Verteilung von Fernsehprogrammen, Bildern und akustischen Programmen erfolgt, sowie einem breitbandigen signalübertragungspfad für die Gesamtheit der Programme, mit welchern die Zentraleinheit mit wenigstens zwei Benutzerkästen in Verbindung steht, bestehend aus
- innerhalb der Zentraleinheit befindlicher Einrichtungen (50, 51a), mit welchen eine Programmabfrage eines Benutzerkastens erfolgt,
- Einrichtungen (84, 72, 69, 68), mit welchen von jedem Benutzerkasten aus Programmanforderungen der Benutzer in Richtung der Zentraleinheit geleitet werden,
- innerhalb der Zentraleinheit vorhandener Einrichtungen, mit welchen nach Empfang der Programnanforderungen der Benutzer Validations-signale (100) der Programmanforderungen der verschiedenen Benutzer erzeugt werden,
- sowie innerhalb eines Benutzerkastens angeordneten Einrichtungen (72, 80, 85, 87), mit welchen unter einer Vielzahl von angebotenen Programmen in Abhängigkeit des Validationssignals ein bestimmtes Programm ausgewählt ist,
wobei jeder Benutzerkasten innerhalb der baumförmigen Architektur zwischen der Zentraleinheit und dem Fernsehempfänger des jeweiligen Benutzers angeordnet ist, dadurch **gekennzeichnet**, daß zusätzlich ein passives Kupplungselement (115, 116 bzw. 117 bis 121) vorgesehen ist, welches auf die Frequenz der Fernbedienung (110) für die Wahl des jeweiligen Programms abgestimmt ist, wobei dieses passive Kopplungselement zwischen dem Antenneneingang des Fernsehempfängers und dem Benutzerkasten jedes Benutzers zwischengeschaltet ist, um auf diese Weise den Empfang des modulierten Trägersignals der Fernbedienung zu gewährleisten und die von dem Benutzer gewünschte Programmwahl in Form eines Kodes zu übertragen, welcher von einem Empfangskreis (82) des mit Einrichtungen (84, 72, 69, 68) versehenen Benutzerkastens entcodiert wird, um auf diese Weise die von dem Benutzer abgegebenen Programmanforderungen in Richtung der Zentraleinheit zu übermitteln .

2. Verteilernetz nach anspruch 1, dadurch **gekennzeichnet**, daß innerhalb der Zentraleinheit eine Fernspeiseeinrichtung für die baumförmige Architektur vorgesehen ist, welche auf permanente Weise eine Speisung der Benutzerkästen des Verteilernetzes bewirkt, wobei jeder Benutzerkasten mit Einrichtungen (66, 65) versehen ist, mit welchen eine Extraktion der Gleichspannung der Fernspeisung erfolgt.

3. Verteilernetz nach Anspruch 1, dadurch **gekennzeichnet**, daß die Benutzerkästen jeweils eine Speichereinheit (81) und eine Vergleichseinheit (89) aufweisen, mit welchen innerhalb des baumförmigen verteilernetzes eine Identifikation des jeweiligen Benutzers erfolgt.

4. Verteilernetz nach Anspruch 1, dadurch **gekennzeichnet**, daß die jeweilige Adresse durch die Reihenfolge der Benutzerkästen innerhalb des baumförmigen Netzes festgelegt ist.

5. Verteilernetz nach anspruch 4, dadurch **gekennzeichnet**, daß die Adresse einen ersten Adressenteil aufweist, welcher dem jeweiligen Ast innerhalb der baumförmigen Architektur entspricht, während ein zweiter Adressenteil der Adresse des Benutzerkastens innerhalb des jeweiligen Verzweigungsastes entspricht.

6. Verteilernetz nach einem der vorangegangenen Ansprüche, dadurch **gekennzeichnet**, daß die Zentraleinheit einen mit einem Modem verbunden Rechner aufweist, welcher ein Dienstsignal erzeugt, das innerhalb vorgegebener Zeitfenster (99) Identifikationscode der Benutzerkästen in Abhängigkeit eines ersten Abschnittes abgibt, welcher entsprechend der Anzahl von adressierbaren Benutzern in eine entsprechend große Anzahl von zeitlichen Fenstern unterteilt ist, wobei ein zeitliches Fenster der von dem Rechner hervorgerufenen Emission der Zahl (101) des abgefragten Benutzers, anschließend dem Empfang (106) einer eventuellen Programmanforderung von Seiten des Benutzers entspricht, und wobei der erste Abschnitt von einem zweiten Abschnitt identischen Aufbaus für die Durchführung der Validation gefolgt ist und ein beliebiges der Fenster für die Emission der Adresse (103) dient, worauf die Emission eines Validationssignals (104) von einem der gewählten Programme erfolgt.

7. Verteilernetz nach Anspruch 6, dadurch **gekennzeichnet**, daß der Benutzerkasten die jeweilige Adresse erkennt, sobald innerhalb des von dem Rechner der Zentraleinheit abgegebenen ersten Abschnittes eine Gleichheit des Vergleichs der Entcodierung des empfangenen Identifikationscode mit dem Wert des innerhalb der Speichereinheit (84) des Benutzerkastens eingespeicherten Code vorliegt, und daß ein Validationssignal (91) die Übertragung des eingespeicherten codes durch ein Modem (72) des Benutzerkastens auslöst, um auf der Dienstleitung des Verteilernetzes in Richtung der Zentraleinheit eine Programmanforderung abzugeben, so daß innerhalb der Zentraleinheit ein bestimmtes Programm zum Abruf gelangt.

8. Verteilernetz nach anspruch 1 oder 7, dadurch **gekennzeichnet**, daß der Empfangskreis (82) ein Entmodulator/Entcodierer ist, welcher mit einem Signalwandler (84) verbunden ist, der ausgangsseitig mit dem Signaleingang eines Modulators/Demodulators FSK (72) verbunden ist, wobei diese Einheiten im Inneren des Benutzerkastens angeordnet sind und wobei der Programnanforderungscode nur dann seriellisiert wird, falls die von der Zentraleinheit abgegebene Adresse identisch mit dem innerhalb des Benutzerkastens eingespeicherten Identifikationssignal ist und falls das Ende des Empfangs eines Adressierwortes von dem Modulator-/Demodulator FSK (72) festgestellt ist.

9. Verteilernetz nach Anspruch 7 oder 8, dadurch **gekennzeichnet**, daß der Rechner der Zentraleinheit in der Folge die Programmanforderung (106) des adressierten Benutzers während des ersten Abschnittes (95) durchführt und in Abhängigkeit des Resultat des Vergleichs zwischen der Programnanforderung und einer verifikation der Wohnung des Benutzers ein Valitationasignal (104) für das jeweilige Programm abgibt.

10. Verteilernetz nach Anspruch 1 oder 8, dadurch **gekennzeichnet**, daß zusätzlich zu dem innerhalb des Netzes abgegebenen Programmen der Rechner der zentraleinheit wenigstens ein Bildprogramm abgibt, welches den benutzer informiert, falls die Zentraleinheit seine Programmwahl verweigert.

11. Verteilernetz nach Anspruch 8 oder 9, dadurch **gekennzeichnet**, daß der Rechner der Zentraleinheit innerhalb eines zweiten Abschnittes (96) auf dem Dienstkanal eine signalfolge abgibt, während welcher jener Benutzerkasten wenigstens einmal innerhalb eines zeitlichen Fensters zur Adressierung gelangt, wobei die Adressierung aus einer ersten Bit-Folge (103) zur Identifikation des Benutzers sowie einer zweiten Bit-Folge (104) entsprechend dem Werte eines Validations-signals in Abhängigkeit der von dem Benutzer während des ersten Abschnittes gemachten Programmanforderung entspricht.

12. Verteilernetz nach Anspruch 1 oder 11, dadurch **gekennzeichnet**, daß der Benutzerkasten eine Empfangseinrichtung für den Wert des Validations-signals enthält, welches mit einer Wähleinheit (85, 87) eines Programms verbunden ist, das innerhalb des baumförmigen Netzes zur Abgabe gelangt.

13. Verteilernetz nach Anspruch 12, dadurch gekennzeichnet, daß die Empfangseinheit einen Demodulator (72) aufweist, der mit einem Serien-Parallel-Wandler (76) und einem Analog-Digital-Wandler (80) verbunden ist, wodurch mit Hilfe des Validations-signals (86) die Abstimmung der mit dem Validations-signal verbundenen Programms erfolgt.

14. Verteilernetz nach Anspruch 12, dadurch **gekennzeichnet**, daß die Programmabstimmung mit Hilfe eines Tuners/Wandlers (85, 87) erfolgt, welcher zwischen dem Eingang (63) des Benutzerkastens und dem Fernsehempfänger des Benutzers zwischengeschaltet ist.

15. Verteilernetz nach einem der vorangegangenen Ansprüche, dadurch **gekennzeichnet**, daß parallel zu dem Tuner/Wandler (85, 87) ein Bandpaßfilter (89) vorgesehen ist, mit welchen eine Sperrung der Frequenzbande von Programmen erfolgt, die gegenüber Programmanforderungen des Benutzers zugänglich sind, so daß andere Programme ohne Einschränkungen direkt von dem Benutzer an seinem Empfänger empfangen werden können.

16. Verteilernetz nach Anspruch 6 oder 2, dadurch **gekennzeichnet,** daß jeder Benutzerkasten eine Einheit (80) aufweist, mit welcher eine Einspeicherung einer Programmanforderung erfolgt, die dann bei Auslösung einer neuerlichen Programmanforderung erneut zur Auslösung gelangt.

17. Verteilernetz nach Anspruch 1, dadurch gekennzeichnet, daß das passive Kopplungselement (116) innerhalb einer koaxialen Verbindungsleitung (115) angeordnet ist, wobei das passive Kopplungselement (116), welches aus einer Induktivität und einem Kondensator besteht, auf die Frequenz der Fernbedienung abgestimmt ist.

18. Verteilernetz nach Anspruch 1, dadurch **gekennzeichnet**, daß das passive Kopplungselement im wesentlichen aus einer mit einer Induktanz (118) verbundenen antenne (117) besteht, um auf diese Weise eine auf die Frequenz der Fernbedienung abgestimmte Einheit zu bilden, wobei die betreffende Einheit über eine Koaxialleitung (120) mit einem mit männlichen und weiblichen Steckerstücken versehenden Stecker (121) verbunden ist.

19. Verteilernetz nach Anspruch 18, dadurch **gekennzeichnet,** daß die mit einer Induktivität verbundene Antenne (117) schwenkbar auf einer Trägerplatte befestigt ist, welche mit entsprechenden Befestigungselementen versehen ist.

20. Verteilernetz nach einem der Ansprüche 1 bzw. 17 bis 19, dadurch **gekennzeichnet**, daß die Fernbedienung (110) eine Tastatur (111), einen Codierkreis (l13), einen mit Hilfe von Signalen eines Codierkreises (113) modulierten Sendeoszillator (114) sowie einen auf einer Druckschaltung ausgelegten Strahlungselement (109) aufweist, wobei letzteres auf die Frequenz abgestimmt ist, die dem passiven Kopplungselement entspricht.

## Claims

1. Interactive toledistribution network with tree architecture of the kind including a central facility controlling the distribution at television programmes, pictures and sound programmes, and a medium for broadband transmission of all the progranmes connecting the central facility to at least two user branch boxes, including
- means (50, 51a) in the central facility for interrogating a user branch box,
- means (84, 72, 69, 68) for transmitting programme requests from users to the central facility from each user branch box,
- means in the central facility for generating, after receiving programme requests from users, signals (100) for enabling the requests of each user,
- means (72, 80, 85, 87) arranged in each user branch box for selecting a program from among all the distributed programmes depending on the enable signal, each user branch box being arranged in the tree architecture between the central facility and the user's television receiver, characterized in that it also, included a passive coupler element (115, 116 or 117 to 121) tuned to the frequency of a radio control (110) for programme selection, the said passive coupler element being connected between the antenna input of the television and the branch box of each user in order to allow reception of the modulated carrier of the radio control transmitting the selection desired by the user in the form of a code decoded by a reception circuit (82) of the user branch box connected to the means (84, 72, 69, 68) for transmitting the programme requests from the user to the central facility.

2. Network according to Claim 1, characterized in that it includes a tree network telesupply device stationed at the central facility and which remains permaneatly biased in order to supply the user branch boxes of the distribution network, each user branch box including a means (66, 65) for extracting the teleaupply DC voltage.

3. Network according to Claim 1, characterized in that the user branch boxed include a unit for storage (81) and comparison (79) of the identification of the user in the tree of the network.

4. Network according to Claim 1, characterized in that the address consists of the serial number of the distribution box within the tree.

5. Network according to Claim 4, characterized in that the address includes a first component corresponding to a spur of the tree and a second component corresponding to the address of the distribution box in the said spur.

6. Network according to one of the preceding claims, characterized in that the central facility includes a computer linked to a modem for handling a service pathway sending, in time windows (99), the identification codes for the user branch boxes in sequence in a first frame, partitioned into as many time windows as there are addressable users, one time window including the sending by the computer of the member (101) of the interrogated user, followed by the receiving (106) of any request from the user, the first frame being followed by a second frame of identical structure for the enabling, any one of the windows including the sending of the address (103), followed by the sending of an enable signal (104) for one of the selected programmes.

7. Network according to Claim 6, characterized in that the user branch box recognises that it has been addressed with the first frame sent by the computer of the central facility when there is equality in the comparison of the decoding of the received identifier code with the value of the code contained in the storage means (84) of the user branch box, an enable signal (91) enabling the transmission of the stored code by a modem circuit (72) of the user branch box so as to send a request over the service pathway of the network to the central facility for the purpose of requesting a particular programme from the central facility.

8. Network according to claim 1 or 7, characterized in that the reception circuit (82) is a demodulator/decoder linked to a serializer circuit (84), the output of which is transmitted to the send input of an FSK modulator demodulator (72), these circuits being arranged inside the user branch box, the code of the request being serialized only if the address sent by the central facility is identical to the identifier stored in the user branch box and if the end of reception of an address and data word is detected by the FSK modulator demodulator (72).

9. Network according to Claim 7 or 8, characterized in that the computer of the central facility next processes the request (106) of the user addressed with the first frame (95) and sends the programme enable signal (104) relating to the result of the comparison between the request and a check of the entitlement of the requesting user.

10. Network according to Claim 1 or 8, characterized in that in addition to the progranmea distributed by the network, the computer of the central facility sends at least one programme of pictures intended to inform the user of the refusal of the central facility to serve his request.

11. Network according to Claim 8 or 9, characterized in that the computer of the central facility sends over the service pathway in the course of a second frame (96) a sequence in the course of which each user branch box is addressed at least once in a time window including a first series of bits (103) representing the identifier of the user followed by a second series of bits (104) representing the value of an enable signal in response to the user's request expressed during the first frame (95).

12. Network according to Claim 1 or 11, characterized in that the user branch box includes a means of receiving the value of the enable signal linked to a means of selecting (85, 87) a programme transported on the tree network.

13. Network according to Claim 12, characterized in that the means of reception includes a demodulator (72) linked to a serial/parallel converter (76) and an analog digital converter (80) intended to tune in, by means of an enable voltage (86), to the programme associated with the enable signal.

14. Network according to Claim 12, characterized in that the tuning-in to the programme is performed by a tuner/interband converter (85, 87) linked between the input (63) of the user branch box and the user's television receiver.

15. Network according to one of the preceding claims, characterized in that it also includes in parallel with the tuner/converter (85, 87), a stop filter (89) for stopping bands reserved for the progranmes amenable to the user's requests, so that the other programmes may be received directly by the user on his receiver in every circumstance.

16. Network according to Claim 6 or 2, characterized in that each user branch box includes a means (80) of holding the request which is reinitialized by the establishing of a new request.

17. Network according to Claim 1, characterized in that the tuned passive coupler element (116) is arranged on a coaxial extender (115), the said passive coupler element (116) consisting of an inductance and a capacitor Which are tuned to the frequency of the radio control.

18. Network according to Claim 1, characterized in that the passive coupler element includes an antenna (117) associated with an inductance (118) to constitute an assembly tuned to the frequency of the radio control and connected by a coaxial cable (120) to a coaxial male female connector (121).

19. Network according to Claim 18, characterized in that the inductance antenna assembly (117) is mounted pivotably on a stand which included fixing means,

20. Network according to one of Claims 1 or 17 to 19, characterized in that the radiocontrol (110) comprises a keypad (111), a coding circuit (113) and a transmitter oscillator circuit (114) modulated by the signals from the coding circuit (113) and a radiating element etched on a printed circuit (109) tuned to the frequency corresponding to coupling with the passive coupler element.
